# EUROPÄISCHE PATENTANMELDUNG

(11) **EP 2 365 171 A2**
(43) Veröffentlichungstag der Anmeldung: **14.09.2011**
(21) Anmeldenummer: 11001161.6
(22) Anmeldetag: 12.02.2011
(51) Int. Cl.: E05D 15/46

(54) **Lagerung einer Klappe an einem Aufbau eines Kraftwagens sowie Karosserie für einen solchen Kraftwagen**

(30) Priorität: 11.03.2010 DE 102010011094
(71) Anmelder: Daimler AG, 70327 Stuttgart (DE)
(72) Erfinder: Fuge, Bernhard, 89155 Erach (DE); Hager, Peter, 89233 Neu-Ulm (DE); Rehle, Stefan, Türkheim (DE)

(57) **Zusammenfassung**

Die Erfindung betrifft eine Lagerung (32) einer Klappe (10'), Tür oder dgl. Flügelelements an einem Aufbau (34) eines Kraftwagens, insbesondere eines Reisebusses, bei welcher wenigstens eine Stelleinrichtung (12') mit wenigstens einem Stellantrieb (52) vorgesehen ist, mittels welchem die Klappe (10') oder dgl. zwischen einer eine Öffnung (46) verschließenden Schließstellung und zumindest einer die Öffnung (46) zumindest bereichsweise freigebenden Offenstellung verstellbar ist, wobei der Stellantrieb (52) der Stelleinrichtung (12') relativ zu der Klappe (10') oder dgl. fest an dieser gehalten und bei einer Verstellung zwischen der Schließstellung und der Offenstellung mitbewegbar ist.

## Beschreibung

Die Erfindung betrifft eine Lagerung einer Klappe an einem Aufbau eines Kraftwagens der im Oberbegriff des Patentanspruchs 1 angegebenen Art sowie eine Karosserie für einen solchen Kraftwagen mit den Merkmalen des Patentanspruchs 5.

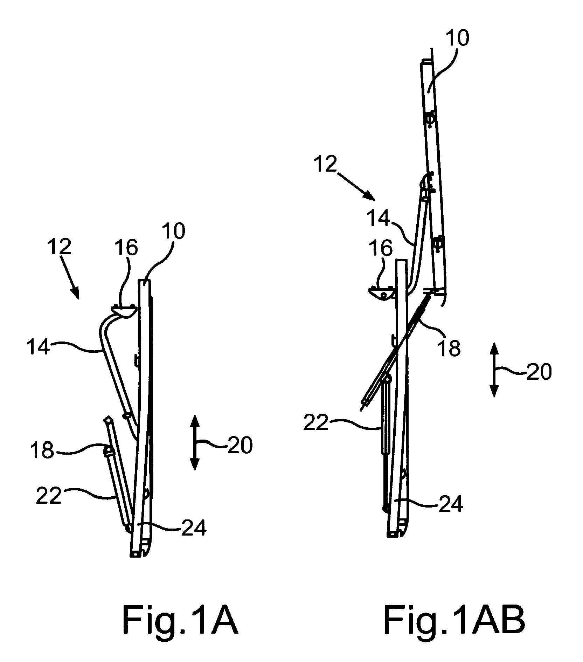

Derartige Lagerungen von Klappen an einem Aufbau eines Kraftwagens, insbesondere eines Reisebusses, sind hinlänglich bekannt und in den Fig. 1A bis 3 dargestellt. Die Fig. 1A zeigt eine Hubklappe 10, welche über eine viergelenkige Stelleinrichtung 12 manuell zwischen einer eine Öffnung verschließenden Schließstellung, welche in der Fig. 1A gezeigt ist, und zumindest einer die Öffnung freigebenden Offenstellungen, welche in der Fig. 1B gezeigt ist, verstellbar ist. Dazu ist die Hubklappe 10 mit einem Tragarm 14 gelenkig verbunden, der wiederum über eine Konsole 16 um eine Schwenkachse schwenkbar an dem nicht dargestellten Aufbau des Reisebusses befestigt ist. Außerdem ist die Hubklappe 10 mit einem Führungsarm 18 gelenkig verbunden, der ebenso gelenkig mit dem besagten Aufbau um eine Schwenkachse schwenkbar verbunden ist. Der Führungsarm 18 dient dabei zur Stabilisierung der Hubklappe 10, damit diese nicht unkontrolliert um die gelenkige Verbindung mit dem Tragarm 14 schwenkt.

Zur Unterstützung der Verstellung der Hubklappe 10 von der Schließstellung in die Offenstellung, wobei die Hubklappe 10 gemäß einem Richtungspfeil 20 in Fahrzeughochrichtung nach oben verstellt wird, ist eine Gasfeder 22 vorgesehen, die einerseits an dem Führungsarm 18 und andererseits an einem Rahmenelement 24 des Aufbaus des Reisebusses um jeweilige Schwenkachsen schwenkbar abgestützt ist.

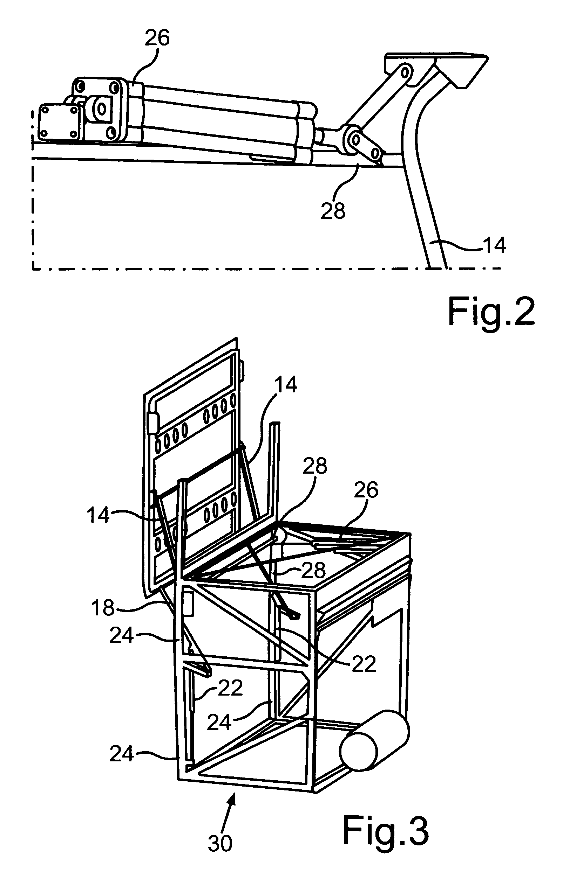

Aus dem Serienkraftwagenbau weiterhin bekannt und in der Fig. 2 dargestellt ist, dass die Stelleinrichtung 12 einen Linearmotor 26 umfassen kann, mittels welchem die Hubklappe 10 von ihrer Schließstellung in ihre Offenstellung verbringbar ist, ohne dass dabei eine Person zum Öffnen der Hubklappe 10 eigene Kraft aufbringen muss. Dazu ist weiterhin ein Verbindungsrohr 28 vorgesehen, welches die Tragarme 14 miteinander verbindet, was der Fig. 3 deutlich zu entnehmen ist.

Die aus dem Serienkraftwagenbau bekannten Hubklappe 10 weist dabei den Nachteil auf, dass zur Integration der Hubklappe 10 mit dem Linearmotor 26 ein großer Aufwand betrieben werden muss, welcher eine Änderung des Aufbaus sowie der Klappe 10 selbst gegenüber der manuell zu betätigenden Klappe 10 gemäß den Fig. 1A und 1B bedeutet. Dies führt einerseits zu einer unerwünschten Kostenerhöhung sowie zu einer Verkleinerung des zur Verfügung stehenden Stauraumes, der durch die Klappe 10 abdeckbar bzw. freigebbar ist. Des Weiteren besteht ein negativer Einfluss von Toleranzen eines die Rahmenelemente 24 umfassenden Rahmens, welcher beispielhaft durch einen Rahmen 30 gemäß Fig. 3 dargestellt ist.

Es ist daher Aufgabe der vorliegenden Erfindung, eine Lagerung einer Klappe an einem Aufbau eines Kraftwagens sowie eine Karosserie für einen Kraftwagen bereitzustellen, welche eine einfache Betätigung der Klappe ermöglichen sowie geringe Kosten aufweisen.

Diese Aufgabe wird durch eine Lagerung einer Klappe an einem Aufbau eines Kraftwagens mit den Merkmalen des Patentanspruchs 1 sowie durch eine Karosserie für einen Kraftwagen mit den Merkmalen des Patentanspruchs 5 gelöst. Vorteilhafte Ausgestaltungen mit zweckmäßigen und nicht-trivialen Weiterbildungen der Erfindung sind in den abhängigen Ansprüchen angegeben.

Eine erfindungsgemäße Lagerung einer Klappe, Tür oder dergleichen Flügelelements an einem Aufbau eines Kraftwagens, insbesondere eines Reisebusses, bei welcher wenigstens eine Stelleinrichtung mit wenigstens einem Stellantrieb vorgesehen ist, mittels welchem die Klappe oder dergleichen zwischen einer eine Öffnung verschließenden Schließstellung zumindest einer die Öffnung zumindest bereichsweise freigebenden Offenstellung verstellbar ist, zeichnet sich dadurch aus, dass der Stellantrieb der Stelleinrichtung an der Klappe oder dergleichen fest gehalten und bei einer Verstellung zwischen der Schließstellung und der Offenstellung mitbewegbar ist.

Der Stellantrieb der Stelleinrichtung ermöglicht eine besonders einfache Verstellung der Klappe von deren Schließstellung in deren zumindest eine Offenstellung und umgekehrt, ohne dass eine Person, wie beispielsweise ein Fahrer des Kraftwagens, eigene Kraft aufbringen muss. Vielmehr kann die Verstellung der Klappe automatisch und damit besonders komfortabel, beispielsweise durch Drücken eines Knopfes oder Umlegen eines Hebels oder dergleichen, erfolgen.

Darüber hinaus weist die erfindungsgemäße Lagerung geringe Kosten auf, da durch die relativ zu der Klappe feste Halterung des Stellantriebs und dessen Mitbewegung bei der Verstellung eine einfache Integration dieser automatisch betätigbaren Klappe in den Kraftwagen ohne Änderungen des Aufbaus und/oder etwaiger Rahmen zur Halterung der Klappe möglich ist. Bereits bestehende, kostengünstige und manuell betätigbare Klappen sind dabei durch die erfindungsgemäße Lagerung in einfacher und kostengünstiger Weise durch die automatisch, also mittels Fremdkraft, betätigbare Klappe der erfindungsgemäßen Lagerung austauschbar, ohne Änderung an dem bestehenden Kraftwagen, dessen Aufbau, etwaiger Rahmen oder dergleichen vornehmen zu müssen. Damit einher geht die Beibehaltung eines sehr großen Volumens beispielsweise eines Stauraums, welcher durch die Klappe der erfindungsgemäßen Lagerung freigebbar bzw. verschließbar ist. Weiterhin ist die erfindungsgemäße Lagerung unabhängig von Toleranzen des Aufbaus, beispielsweise des Rohbaus, des Kraftwagens, da der Stellantrieb in die Klappe integriert und damit eine zusätzliche, toleranzempfindliche Schnittstelle zwischen Stellantrieb und Aufbau vermieden ist.

Bei einer besonders vorteilhaften Ausführungsform der Erfindung ist der Stellantrieb als Drehantrieb ausgebildet. In diesem Falle erzeugt also der Stellantrieb ein Drehmoment und eine Drehbewegung, wobei das Drehmoment klappenseitig auf den Aufbau oder ggf. auf ein Traggestell des Kraftwagens, an welchem die Klappe zu halten ist, übertragen wird. Somit erfolgt die Abstützung des Drehmoments auf der Klappe anstatt am Aufbau oder am Rohbau des Kraftwagens.

Ein weiterer Vorteil des Drehantriebs ist, dass eine Kraft- bzw. Momentenwirkung des Drehantriebs nicht über Hebel und bestimmte Kinematiken in eine Rotationsbewegung zur Darstellung eines Verschwenkens um eine Schwenkachse der Klappe umgewandelt werden muss, wodurch die Verstellung der Klappe zwischen ihrer Offenstellung und ihrer Schließstellung besonders energieeffizient und somit ohne besonders große und unerwünschte Verluste durchführbar ist.

Vorteilhafterweise ist der Stellantrieb über eine Strebenanordnung an der Klappe gehalten, was den Vorteil birgt, dass dadurch eine besonders großflächige Abstützung der Krafteinwirkung des Stellantriebs auf die Klappe realisiert ist. Dies vermeidet eine punktuelle Krafteinleitung und damit eine bezogen auf eine Fläche besonders hohe Krafteinleitung, was eine hohe Lebensdauer und eine sehr gute Funktionssicherheit über diese hohe Lebensdauer der erfindungsgemäßen Lagerung gewährleistet. Die Halterung und damit die Abstützung des Stellantriebs an der Klappe kann dabei auch über definierte Anbindungspunkte erfolgen, die durch die Strebenanordnung um einen gewissen Abstand voneinander beabstandet sind zur Darstellung einer besonders vorteilhaften und gleichmäßigen Krafteinleitung in die Klappe.

Die Erfindung betrifft auch eine Karosserie für einen Kraftwagen, insbesondere einen Reisebus, mit zumindest einer erfindungsgemäßen Lagerung, wobei bei einer Ausführungsform mittels des Stellantriebs zumindest ein mit dem Stellantrieb drehfest verbundener Drehstab der Stelleinrichtung drehbar ist, welcher mit zumindest einem zumindest im Wesentlichen schräg, insbesondere senkrecht, zu dem Drehstab verlaufenden Schwenkarm der Stelleinrichtung drehfest verbunden ist, wobei der Schwenkarm um eine Schwenkachse schwenkbar an dem Aufbau gehalten ist. Damit ist die Klappe über den Stellantrieb, den Drehstab und den Schwenkarm an dem Aufbau gehalten, besonders einfach verstellbar und kostengünstig in den Kraftwagen integrierbar. Vorteilhafterweise ist auch der Drehstab drehbar an der Klappe abgestützt, was mit einer verbesserten Krafteinleitung und Abstützung des Stellantriebs in bzw. an der Klappe einhergeht.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnungen zeigen in:
- Fig. 1A: eine Seitenansicht einer Hubklappe für einen Reisebus gemäß dem Stand der Technik in einer Schließstellung;
- Fig. 1 B: eine Seitenansicht der Hubklappe gemäß Fig. 1A in einer Offenstellung;
- Fig. 2: eine perspektivische Ansicht eines Linearmotors zum Betätigen einer weiteren Ausführungsform einer Hubklappe für einen Reisebus gemäß dem Stand der Technik;
- Fig. 3: eine perspektivische Ansicht der mittels des Linearmotors gemäß Fig. 2 betätigbaren Hubklappe in einer Offenstellung;
- Fig. 4: eine perspektivische Ansicht einer Ausführungsform der erfindungsgemäßen Lagerung.

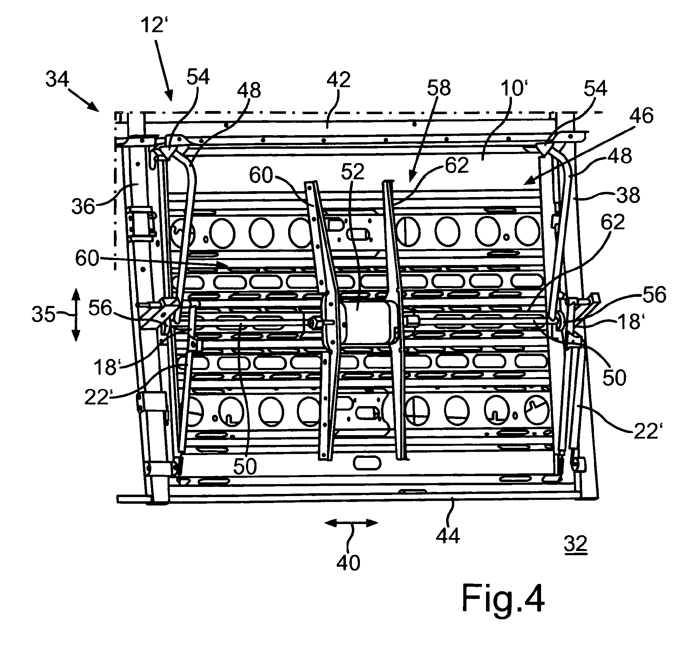

Während die Figuren 1 bis 3 Hubklappen für Reisebusse gemäß dem Stand der Technik zeigen, zeigt die Fig. 4 eine Lagerung einer solchen Hubklappe, welche eine einfache Betätigung sowie eine sehr kostengünstige Integration dieser in einen Reisebus ermöglicht.

Die Fig. 4 zeigt eine Lagerung 32 einer Hubklappe 10' an einem Aufbau 34 eines Reisebusses, wobei der Aufbau 34 in Fahrzeughochrichtung gemäß einem Richtungspfeil 35 verlaufende Rahmenelemente 36 und 38 sowie in Fahrzeuglängsrichtung gemäß einem Richtungspfeil 48 verlaufende Rahmenelemente 42 und 44 umfasst. Die Rahmenelemente 36, 38, 42 und 44 begrenzen dabei eine Öffnung 46, über welche ein Stauraum des Reisebusses zur Unterbringung von Gepäck oder dergleichen zugänglich ist.

Bei der Lagerung 32 ist eine Stelleinrichtung 12' vorgesehen, die Schwenkarme 48, Führungsarme 18' sowie Drehstäbe 50 und Gasfedern 22' umfasst. Des Weiteren umfasst die Stelleinrichtung 12' einen Stellantrieb in Form eines pneumatisch betätigbaren Drehantriebs 52, mittels welchem die Hubklappe 10' zwischen einer die Öffnung 46 verschließenden und in der Fig. 4 gezeigten Schließstellung und zumindest einer die Öffnung 46 freigebenden Offenstellung verstellbar ist.

Wie der Fig. 4 zu entnehmen ist, ist der Drehantrieb 52 relativ zu der Hubklappe 10' fest an dieser gehalten und bei einer Verstellung dieser zwischen der Schließstellung und der Offenstellung mitbewegbar. Der Drehantrieb 52 erzeugt eine Drehbewegung und ein Drehmoment, welches klappenseitig auf die Stelleinrichtung 12' übertragen wird. Durch eine durch die Stelleinrichtung 12' dargestellte Zwangskinematik bewirkt ein Verdrehen der Drehstäbe 50 durch die Drehbewegung des Stellantriebs 52 ein Öffnen bzw. ein Schließen der Hubklappe 10. Dazu sind die Schwenkarme 48 einerseits über jeweilige Konsolen 54 an dem Aufbau 34 um eine jeweilige parallel zur Fahrzeuglängsrichtung gemäß dem Richtungspfeil 40 verlaufende Schwenkachse schwenkbar gehalten. Andererseits sind die Schwenkarme 48 drehfest mit jeweils einem der Drehstäbe 50 verbunden, wobei sie senkrecht zu den Drehstäben 50 verlaufen. Die Drehstäbe 50 wiederum sind drehbar über jeweilige Konsolen 56 an der Hubklappe 10' abgestützt, wodurch ein definiertes und sicheres Öffnen der Klappe realisiert ist.

Zur Ergänzung der Stelleinrichtung 12' zu einer viergelenkigen Stelleinrichtung 12' sind die Führungsarme 18' vorgesehen, die einerseits schwenkbar um eine Schwenkachse an den Rahmenelementen 38 und andererseits schwenkbar um eine Schwenkachse an der Hubklappe 10' gehalten und abgestützt sind.

Gasfedern 22' dienen dem Zweck, eine Verstellung der Hubklappe 10' zwischen ihrer Offenstellung und ihrer Schließstellung zu unterstützen, um damit den Einsatz eines kleiner dimensionierten und ggf. leistungsschwächeren Drehantriebs 52 zu ermöglichen, was die Kosten der Lagerung 32 in einem geringen Rahmen hält.

Wie der Fig. 4 weiter zu entnehmen ist, ist der Drehantrieb 52 über eine Strebenanordnung 58 an der Hubklappe 10' gehalten und an dieser abgestützt, woraus eine flächige Kraft- bzw. Drehmomenteneinleitung von dem Drehantrieb 52 auf die Hubklappe 10' resultiert. Die Strebenanordnung 58 umfasst zu diesem Zweck Blechkantteile 60 und 62. Zur Schaffung einer bestimmten Stabilität der Hubklappe 10', die als Blechklappe ausgebildet ist, weist sie eine Rippenstruktur 60 auf, wobei Rippen der Rippenstruktur 60 einen trapezförmigen Querschnitt aufweisen. Stellvertretend hierfür sei eine solche Rippe 62 erwähnt, die im Bereich des Drehantriebs 52 einen Ausschnitt aufweist, um den Drehantrieb 52 zumindest nahezu bauraumneutral in die Hubklappe 10' integrieren.

Bei der Lagerung 32 handelt es sich somit um eine Lösung, die einfach und kostengünstig in den Reisebus integriert werden kann, ohne Änderungen an dessen Rohbau, welcher beispielsweise den Aufbau 34 mit den Rahmenelementen 36, 38, 42 und 44 umfasst, durchführen zu müssen bei gleichzeitiger Realisierung einer automatischen Betätigung der Klappe, ohne dass eine Person wie beispielsweise ein Fahrer des Reisebusses eigene Kraft zum Verstellen der Hubklappe 10' aufbringen müsste.

## Patentansprüche

1. Lagerung (32) einer Klappe (10'), Tür oder dgl. Flügelelements an einem Aufbau (34) eines Kraftwagens, insbesondere eines Reisebusses, bei welcher wenigstens eine Stelleinrichtung (12') mit wenigstens einem Stellantrieb (52) vorgesehen ist, mittels welchem die Klappe (10') oder dgl. zwischen einer eine Öffnung (46) verschließenden Schließstellung und zumindest einer die Öffnung (46) zumindest bereichsweise freigebenden Offenstellung verstellbar ist,
**dadurch gekennzeichnet, dass**
der Stellantrieb (52) der Stelleinrichtung (12') an der Klappe (10') oder dgl. fest gehalten und bei einer Verstellung zwischen der Schließstellung und der Offenstellung mitbewegbar ist.

2. Lagerung (32) nach Anspruch 1,
**dadurch gekennzeichnet, dass**
der Stellantrieb (52) als Drehantrieb (52) ausgebildet ist.

3. Lagerung (32) nach Anspruch 2,
**dadurch gekennzeichnet, dass**
der Drehantrieb (52) als pneumatischer Drehantrieb (52) ausgebildet ist.

4. Lagerung (32) nach einem der vorhergehenden Ansprüche,
**dadurch gekennzeichnet, dass**
der Stellantrieb (52) über eine Strebenanordnung (58) an der Klappe (10') gehalten ist.

5. Karosserie für einen Kraftwagen, insbesondere einen Reisebus, mit zumindest einer Lagerung (32) nach einem der vorhergehenden Ansprüche.

6. Karosserie nach Anspruch 5,
**dadurch gekennzeichnet, dass**
mittels des Stellantriebs (52) zumindest ein mit dem Stellantrieb (52) drehfest verbundener Drehstab (50) der Stelleinrichtung (12') drehbar ist, welcher mit zumindest einem zumindest im Wesentlichen schräg, insbesondere senkrecht, zu dem Drehstab (50) verlaufenden Schwenkarm (48) der Stelleinrichtung (12') drehfest verbunden ist, wobei der Schwenkarm (48) um eine Schwenkachse schwenkbar an dem Aufbau gehalten ist.

7. Karosserie nach einem der Ansprüche 5 oder 6,
**dadurch gekennzeichnet, dass**
die Stelleinrichtung (12') als viergelenkige Stelleinrichtung (12') ausgebildet ist.

8. Karosserie nach einem der Ansprüche 5 bis 7,
**dadurch gekennzeichnet, dass**
zumindest eine Federeinrichtung (22'), insbesondere eine Gasfeder (22'), vorgesehen ist, mittels welcher ein Verstellen der Klappe (10') unterstützbar ist.
